# FASCICULE DE BREVET EUROPEEN

(11) **EP 0 315 531 B1**
(45) Date de publication et mention de la délivrance du brevet: **03.02.1993**
(21) Numéro de dépôt: 88402757.4
(22) Date de dépôt: 03.11.1988
(51) Int. Cl.: H02G 3/04

(54) **Profilé en deux parties emboitables, en particulier goulotte à corps et couvercle**
Profileisen mit zwei einfügbaren Teilen, insbesondere Rinne mit einem Körper und einem Deckel
Extruded piece, with two interlocking parts, in particular a duct with body and cover

(30) Priorité: 06.11.1987 FR 8715427
(43) Date de publication de la demande: 10.05.1989
(73) Titulaire: PLANET WATTOHM, 60303 Senlis (FR)
(72) Inventeur: Claisse, Jean-Jacques, F-60800 Crepy en Valois (FR)
(74) Mandataire: CABINET BONNET-THIRION

(56) Documents cités:
- FR-A- 2 536 219
- FR-A- 2 593 973
- GB-A- 1 153 183

## Description

La présente invention concerne d'une manière générale les profilés.

Elle vise plus particulièrement les profilés qui, venus d'extrusion, comportent longitudinalement deux parties emboîtables l'une avec l'autre par des moyens d'encliquetage prévus entre elles à cet effet.

C'est le cas, par exemple, des goulottes du type de celles susceptibles d'être mises en oeuvre pour le logement et la protection de conducteurs électriques ou de quelconques autres conduits.

Ces goulottes - telles qu'évoquées notamment dans FR-A-2.536.219 - comportent, en effet, d'une part, une partie formant corps, qui, pour la définition d'un compartiment propre à un tel logement, présente en pratique une semelle et deux ailes latérales, lesdites ailes latérales étant éventuellement évidées, de place en place, pour la sortie des conducteurs électriques ou conduits concernés, par des échancrures nécessitant la mise en oeuvre d'un poinçonnage après l'extrusion, et, d'autre part, une partie formant couvercle, qui est propre à fermer en service la partie formant corps précédente.

Pour certains profilés de ce type, et c'est le cas des goulottes de section transversale relativement modeste, il a déjà été proposé d'assurer à l'aide de la même filière l'extrusion de l'une et l'autre des deux parties qui les constituent, cette filière comportant à cet effet, à distance l'un de l'autre, au contour de l'une et l'autre de ces parties, les deux passages nécessaires.

Il a été proposé, également, d'assembler l'une à l'autre ces deux parties après leur extrusion, dès que leur refroidissement est suffisant.

A ce jour, cet assemblage ne peut se faire que pour la position normale de service de la partie formant couvercle.

Autrement dit, après cet assemblage, la partie formant couvercle ferme alors immanquablement la partie formant corps à laquelle elle est associée.

Pour le fabricant, cette disposition présente le double avantage d'une production simultanée et d'un conditionnement commun pour l'une et l'autre des deux parties du profilé concerné, l'ensemble conduisant en pratique à un gain appréciable de productivité.

Mai, à ce jour, on ne peut y recourir pour les profilés présentant une section transversale de relativement grande dimension.

La raison en est double.

Tout d'abord, lorsque des échancrures sont à découper dans les ailes latérales de la partie formant corps, la partie formant couvercle constitue une gêne pour le travail des outils de découpage correspondants lorsqu'elle est ainsi en place sur cette partie formant corps.

En outre, si le conditionnement de l'ensemble se fait avec la partie formant couvercle ainsi en place sur la partie formant corps, le volume mort correspondant devient rapidement rédhibitoire.

Il a été proposé par ailleurs, par le document GB-A-1.153.183, un profilé qui comporte, dos à dos, de manière très particulière, deux compartiments distincts ayant chacun leur propre accès, et qui présente, en double, en pratique sur les ailes latérales de ses deux compartiments, des moyens d'encliquetage propres à permettre d'y rapporter une partie formant couvercle, étant précisé que ceux deux compartiments peuvent ainsi être fermés par des parties formant couvercle similaires.

La présente invention a d'une manière générale pour objet une disposition, qui, reprenant en double de tels moyens d'encliquetage, permet de surmonter de manière très simple les difficultés précédemment exposées en ce qui concerne les profilés du genre concerné.

Ce résultat est obtenu selon l'invention par le profilé défini à la revendication 1.

Les moyens d'encliquetage ainsi prévus sur la semelle de la partie formant corps sont utilisés pour l'assemblage pratiqué après l'extrusion.

Autrement dit, cet assemblage conduit à rapporter la partie formant couvercle au dos de la semelle de la partie formant corps, au lieu de la rapporter sur les ailes latérales de cette dernière, comme cela est normalement le cas en service

Dans une telle position, la partie formant couvercle ne gêne en rien le travail des outils nécessaires à la découpe d'échancrures dans ces ailes latérales.

En outre, il laisse totalement dégagé le volume interne de la partie formant corps, en sorte que, pour le conditionnement de l'ensemble, il peut avantageusement être adopté, au bénéfice d'une réduction notable du volume correspondant, une disposition tête-bêche interdite lorsque, comme cela est le cas en position normale de service, la partie formant couvercle occulte le débouché de ce volume interne.

Ainsi sont conservés, sans en avoir les inconvénients, les avantages d'une production simultanée et d'un conditionnement commun, quelles que soient les dimensions de la section transversale du profilé concerné.

Rien de comparable n'est envisagé dans le document GB-A-1.153.183, l'équivalent d'une semelle ne pouvant y être constitué que par le fond commun aux deux compartiments du profilé correspondant, et ce fond étant dépourvu de tout moyen d'encliquetage.

Les caractéristiques et avantages de l'invention ressortiront d'ailleurs de la description qui va suivre, à titre d'exemple, en référence aux dessins schématiques annexés sur lesquels :
la figure 1 est une vue en perspective éclatée d'un profilé auquel est applicable l'invention ;
la figure 2 est une vue en perspective analogue à celle de la figure 1, pour la position normale de service des deux parties constitutives de ce profilé ;
la figure 3 est une vue en élévation de la filière utilisable pour l'extrusion de ce profilé ;
la figure 4 est une vue en perspective qui, analogue à celle de la figure 2, illustre l'autre des positions autorisées par l'invention pour les parties constitutives du profilé concerné ;
les figures 5 et 6 sont des vues en perspective qui, analogues chacune respectivement aux figures 2 et 4, illustrent l'application de l'invention à un autre type de profilé.

Ces figures illustrent, à titre d'exemple, l'application de l'invention à une goulotte propre au logement de conducteurs électriques ou de quelconques autres conduits non représentés.

Globalement, une telle goulotte constitue un profilé comportant deux parties, qui, réalisables chacune individuellement par extrusion, et par exemple par extrusion d'une quelconque matière synthétique appropriée, sont emboîtables l'une avec l'autre par des moyens d'encliquetage prévus entre elles à cet effet, en étant en pratique constitué de ces seules deux parties.

Il s'agit, plus précisément, d'une partie formant corps 10, et d'une partie formant couvercle 11 propre à fermer en service une telle partie formant corps 10.

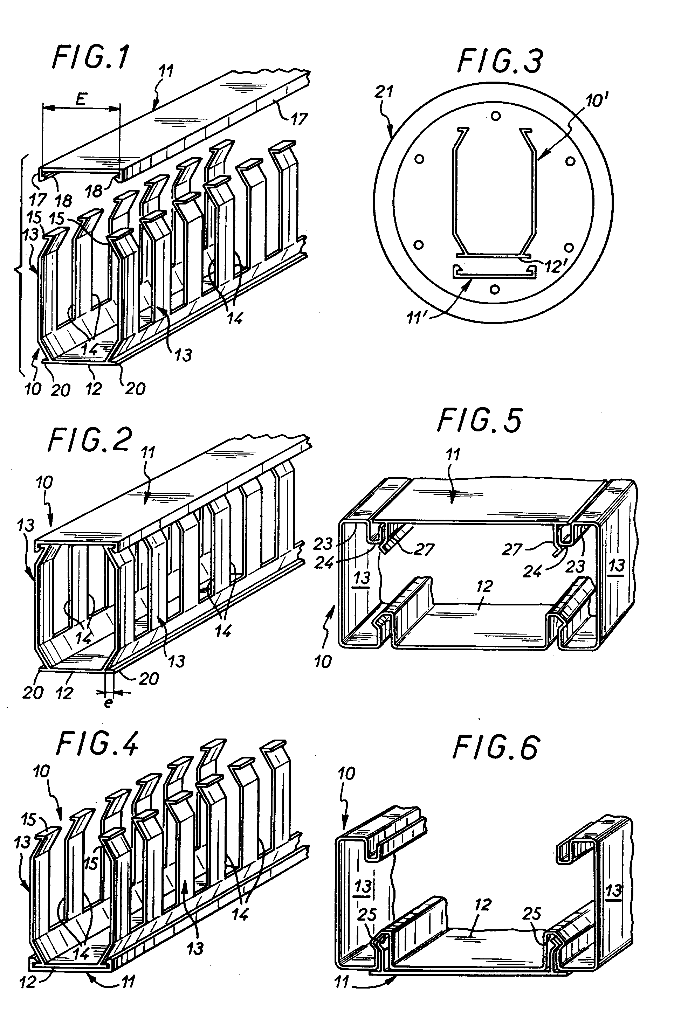

Dans la forme de réalisation représentée sur les figures 1 à 4, la partie formant corps 10 comporte, globalement, pour la délimitation d'un compartiment, une semelle 12, et, flanquant, chacune respectivement, le long de ses bords longitudinaux, cette semelle 12, deux ailes latérales 13.

Plus précisément, encore, ces ailes latérales 13 sont, dans cette forme de réalisation, chacune évidées, de place en place, suivant un pas régulier, et en correspondance de l'une à l'autre, par des échancrures 14, qui, par exemple de forme globalement quadrangulaire, tel que représenté, s'étendent, transversalement, sur une partie au moins de leur hauteur à compter de leur extrémité libre.

De manière connue en soi, c'est à cette extrémité libre des ailes latérales 13 de la partie formant corps 10 que sont prévus, dans la forme de réalisation représentée, les moyens d'encliquetage propres à permettre de rapporter, en service, sur une telle partie formant corps 10, la partie formant couvercle 11 qui lui est associée.

Dans la forme de réalisation représentée, ces moyens d'encliquetage sont constitués, pour cette partie formant corps 10, par deux retours 15, qui, globalement parallèlement à la semelle 12, s'étendent chacun respectivement, en directions opposées l'un par rapport à l'autre, à compter de l'extrémité libre des ailes latérales 13, en étant de place en place localement interrompus par les échancrures 14 affectant celles-ci.

Corollairement, dans la forme de réalisation représentée sur les figures 1 à 4, la partie formant couvercle 11 se présente sous la forme d'une simple plaquette de largeur comparable à celle de la semelle 12 de la partie formant corps 10, et les moyens d'encliquetage qu'elle comporte pour être rapportée sur cette partie formant corps 10 sont formés de deux baguettes 17, à profil transversal en crochet, qu'elle présente parallèlement l'une à l'autre à cet effet, en saillie sur sa surface inférieure, le long, chacune respectivement, de ses bords longitudinaux, avec les bourrelets formant crochets 18 de ces baguettes 17 dirigés l'un vers l'autre.

Ainsi qu'il est aisé de la comprendre, et tel qu'illustré par la figure 2, en position normale de service, et moyennant une déformation élastique temporaire des ailes latérales 13 de la partie formant corps 10, la partie formant couvercle 11 est emboîtée, par ses baguettes à profil en crochet 17, sur cette partie formant corps 10, les bourrelets 18 de ces baguettes à profil en crochet 17 venant se crocheter sous les retours 15 des ailes latérales 13 de cette partie formant corps 10.

Ces dispositions sont bien connues par elles-mêmes, et ne faisant pas en propre l'objet de la présente invention, elles ne seront pas décrites plus en détail ici.

Suivant l'invention, la partie formant corps 10 comporte en double les moyens d'encliquetage propres à permettre d'y rapporter la partie formant couvercle 11, en sorte que ladite partie formant couvercle 11 peut y être rapportée en l'une ou l'autre de deux positions distinctes, à savoir sa position normale de service, figure 2, et une position autre que celle-ci, figure 4.

Plus précisément, en sus des ailes latérales 13, tel que décrit précédemment, la semelle 12 de la partie formant corps 10 comporte également des moyens d'encliquetage propres à permettre d'y rapporter la partie formant couvercle 11.

En pratique, ces moyens d'encliquetage sont formés, dans la forme de réalisation plus particulièrement représentée sur les figures 1 à 4, par deux prolongements latéraux 20 que présente, en saillie, chacun respectivement, sur les ailes latérales 13, à la racine de celles-ci, et à l'écartement E des baguettes à profil en crochet 17 de la partie formant couvercle 11, cette semelle 12.

Plus précisément, dans cette forme de réalisation, les prolongements latéraux 20 que comporte ainsi la semelle 12 de la partie formant corps 10 s'étendent dans le plan de cette semelle 12.

Autrement dit, cette semelle 12 dépasse des ailes latérales 13, d'une quantité e correspondant, de chaque côté, à la largeur de ces prolongements latéraux 20, et c'est par les tranches correspondantes, qui sont écartées l'une de l'autre de l'écartement E entre les baguettes à profil en crochet 17 de la partie formant couvercle 11, qu'elle forme directement par elle-même les moyens d'encliquetage propres à permettre d'y rapporter cette partie formant couvercle 11.

En pratique, l'épaisseur de la semelle 12, et de ses prolongements latéraux 20, est comparable, sinon identique, à celle des retours 15 des ailes latérales 13, et la hauteur des baguettes à profil en crochet 17 de la partie formant couvercle 11 est établie en conséquence.

En pratique, également, pour augmenter le volume disponible à l'intérieur du compartiment que délimite la partie formant corps 10, les ailes latérales 13 de celle-ci ont, en section transversale, dans la forme de réalisation représentée, un profil en trapèze, avec leurs concavités tournées l'une vers l'autre.

Mais cette disposition n'est en rien impérative, et elle ne doit donc pas être considérée comme limitative de l'invention.

Tel qu'illustré par la figure 3, la partie formant corps 10 et la partie formant couvercle 11 peuvent avantageusement être extrudées à l'aide d'une même filière 21, cette filière 21 présentant, disposés à l'aplomb l'un de l'autre, les deux passages 10′, 11′ propres, chacun respectivement, à une telle extrusion.

Mais, suivant l'invention, le passage 10′ propre à l'extrusion de la partie formant corps 10 est disposé au-dessus du passage 11′ propre à l'extrusion de la partie formant couvercle 11, avec sa concavité tournée dans le même sens.

Autrement dit, le passage 11' est disposé du côté de la partie 12' du passage 10' correspondant à la formation de la semelle 12 de la partie formant corps 10, et il a sa concavité tournée vers cette partie 12'.

Ainsi, lorsque, après extrusion, il est procédé, par emboîtage respectif, à un assemblage de la partie formant couvercle 11 sur la partie formant corps 10, cet assemblage se fait sur la semelle 12 de cette partie formant corps 10, au dos de celle-ci, tel que représenté à la figure 4.

Les figures 5 et 6 illustrent l'application de l'invention au cas où, à leur extrémité libre, les ailes latérales 13 de la partie formant corps 10 présentent, chacune respectivement, et en direction l'une vers l'autre, des retours 23, et où les baguettes à profil en crochet 27 de la partie formant couvercle 11 correspondante sont destinées à coopérer en encliquetage avec des canaux 24 bordant, en regard l'un de l'autre, ces retours 23.

Ces dispositions étant bien connues par elles-mêmes, elles ne seront pas, comme précédemment, décrites plus en détail ici.

Suivant l'invention, les moyens d'encliquetage que la partie formant corps 10 comporte pour permettre d'y rapporter la partie formant couvercle 11 en une autre position que la position normale de service de celle-ci sont formés par deux rainures 25, que présente, en creux, sur sa face extérieure, et à l'écartement des baguettes à profil en crochet 27 de la partie formant couvercle 11, sa semelle 12, et dont le profil est complémentaire de celui de ces baguettes à profil en crochet 27.

Comme précédemment, la partie formant couvercle 11 peut, ainsi, après extrusion, être rapportée au dos de la semelle 12 de la partie formant corps 10, tel que représenté à la figure 6.

Bien entendu, la présente invention ne se limite pas aux formes de réalisation décrites et représentées, mais englobe toute variante d'exécution.

En outre, le domaine d'application de l'invention n'est pas limité à celui des seules goulottes plus particulièrement décrites et représentées, mais s'étend d'une manière générale à n'importe quel type de goulotte, et d'une manière plus générale encore, à n'importe quel type de profilé formé de deux parties emboîtables l'une avec l'autre par des moyens d'encliquetage prévus entre elles à cet effet.

## Revendications

1. Profilé, en particulier goulotte pour câble, en deux parties extrudées formant respectivement corps (10) délimitant un volume avec une semelle (12) entre deux ailes latérales (13), et couvercle (11), des moyens d'encliquetage sous forme de profils complémentaires d'emboîtement (15-17, 24-27) étant ménagés à l'extrémité libre desdites ailes, d'une part, et sur la partie couvercle, d'autre part, caractérisé par l'aménagement au dos de la semelle (12) d'un profil d'emboîtement (20, 25) à l'image du profil d'emboîtement (15, 24) des ailes, en sorte que le couvercle peut être rapporté sur le corps en l'une ou l'autre de deux positions distinctes, à savoir une position normale de service et une position d'attente où le couvercle se trouve accolé au dos de la semelle.

2. Profilé suivant la revendication 1, caractérisé en ce que, les moyens d'encliquetage que comporte la partie formant couvercle (11) étant formés de deux baguettes à profil en crochet (17) que présente, en saillie, parallèlement l'une à l'autre ladite partie formant couvercle (11), les moyens d'encliquetage que comporte conjointement la semelle (12) de la partie formant corps (10) sont formés par deux prolongements latéraux (20) que présente, en saillie, chacun respectivement, sur les ailes latérales (11) de ladite partie formant corps (10), et à l'écartement (E) desdites baguettes à profil en crochet (17) de la partie formant couvercle (11), ladite semelle (12).

3. Profilé suivant la revendication 2, caractérisé en ce que les prolongements latéraux (20) de la semelle (12) de la partie formant corps (10) s'étendent dans le plan de ladite semelle (12).

4. Profilé suivant la revendication 3, caractérisé en ce que les ailes latérales 13 de la partie formant corps (10) ont, en section transversale, un profil en trapèze, avec leurs concavités tournées l'une vers l'autre.

5. Profilé suivant la revendication 1, caractérisé en ce que, les moyens d'encliquetage que comporte la partie formant couvercle (11) étant formés de deux baguettes à profil en crochet (27) que présente, en saillie, parallèlement l'une à l'autre ladite partie formant couvercle (11), les moyens d'encliquetage que comporte conjointement la semelle (12) de la partie formant corps (10) sont formés par deux rainures (25), à profil complémentaire de celui desdites baguettes à profil en crochet (27), que présente en creux, sur sa face extérieure, et à l'écartement (E) de ces baguettes à profil en crochet (27), ladite semelle (12).

6. Profilé suivant l'une quelconque des revendicvations 1 à 5, caractérisé en ce que, s'agissant d'un profilé extrudé, la partie formant couvercle (11) est, après extrusion, rapportée au dos de la semelle (12) de la partie formant corps (10).

## Claims

1. A shaped member, in particular a channel for a cable, in two extruded parts which respectively form a body (10) defining a volume with a base portion (12) between two lateral limb portions (13), and a cover (11), latching means in the form of complementary engagement profiles (15-17, 24-27) being provided at the free ends of said limb portions, on the one hand, and on the cover part, on the other hand, characterised by the provision at the back of the base portion (12) of an engagement profile (20, 25) which is in the image of the engagement profile (15, 24) on the limb portions, so that the cover can be fitted to the body in one or other of two separate positions, namely a normal operational position and a readiness position in which the cover is joined to the back of the base portion.

2. A shaped member according to claim 1 characterised in that, the latching means on the part forming the cover (11) being formed by two hook-shaped strips (17) which are provided in projecting relationship parallel to each other on said part forming the cover (11), the latching means which the base portion (12) of the part forming the body (10) jointly comprises are formed by two lateral extensions (20) which said base portion (12) has in projecting relationship, each disposed respectively on the lateral limb portions (13) of said part forming the body (10) and at the spacing (E) of said hook-shaped strips (17) of the part forming the cover (11).

3. A shaped member according to claim 2 characterised in that the lateral extensions (20) of the base portion (12) of the part forming the body (10) extend in the plane of said base portion (12).

4. A shaped member according to claim 3 characterised in that the lateral limb portions (13) of the part forming the body (10) have a trapezoidal configuration in cross-section, with their concavities directed towards each other.

5. A shaped member according to claim 1 characterised in that, the latching means on the part forming the cover (11) being formed by two hook-shaped strips (27) which are provided in projecting relationship parallel to each other on said part forming the cover (11), the latching means which the base portion (12) of the part forming the body (10) jointly comprises are formed by two grooves (25) of a profile which is complementary to that of said hook-shaped strips (27), said base portion (12) having said grooves in hollowed relationship on its outward face and at the spacing (E) of said hook-shaped strips (27).

6. A shaped member according to any one of claims 1 to 5 characterised in that, being an extruded member, the part forming the cover (11) is after extrusion fitted to the back of the base portion (12) of the part forming the body (10).

## Patentansprüche

1. Profilteil, insbesondere Rinne für Kabel, aus zwei extrudierten Teilen, die einen Körper (10), der ein Volumen mit einer Fußplatte (12) zwischen zwei seitlichen Schenkein (13) abgrenzt, bzw. einen Deckel (11) formen, wobei Einklinkmittel in Form von komplementären Einsteckprofilen (15-17, 24-27) am freien Ende der Schenkel einerseits und am Deckelteil andererseits vorgesehen sind, gekennzeichnet durch die Anordnung eines Einsteckprofils (20, 25) nach dem Bild des Einsteckprofils (15, 24) der Schenkel auf dem Rücken der Fußplatte (12), so daß der Deckel an dem Körper in der einen oder der anderen von zwei verschiedenen Stellungen angebracht sein kann, und zwar in einer normalen Betriebsstellung und einer Wartestellung, in der der Deckel am Rücken der Fußplatte angefügt ist.

2. Profilteil nach Anspruch 1, dadurch gekennzeichnet, daß, wenn die Einklinkmittel, die der den Deckel (11) bildende Teil umfaßt, von zwei Leisten mit Hakenprofil (17) geformt sind, die der den Deckel bildende Teil (11) vorstehend parallel zueinander aufweist, die Einklinkmittel, die gleichzeitig die Fußplatte (12) des den Körper (10) formenden Teils umfaßt, von zwei seitlichen Verlängerungen (20) geformt sind, die die Fußplatte (12) jeweils an den seitlichen Schenkeln (13) des den Körper (10) bildenden Teils vorspringend und im Abstand (E) der Leisten mit Hakenprofil (17) des den Deckel bildenden Teils (11) besitzt.

3. Profilteil nach Anspruch 2, dadurch gekennzeichnet, daß die seitlichen Verlängerungen (20) der Fußplatte (12) des den Körper bildenden Teils (10) sich in der Ebene der Fußplatte (12) erstrecken.

4. Profilteil nach Anspruch 3, dadurch gekennzeichnet, daß die seitlichen Schenkel (13) des den Körper (10) bildenden Teils im Querschnitt ein Trapezprofil haben, wobei ihre Konkavitäten einander zugewandt sind.

5. Profilteil nach Anspruch 1, dadurch gekennzeichnet, daß, wenn die Einklinkmittel, die der den Deckel (11) bildende Teil umfaßt, von zwei Leisten mit Hakenprofil (27) geformt sind, die der den Deckel (11) bildende Teil vorspringend zueinander parallel besitzt, die Einklinkmittel, die gleichzeitig die Fußplatte (12) des den Körper (10) bildenden Teils umfaßt, von zwei Nuten (25) mit zum Profil der Leisten mit Hakenprofil (27) ergänzendem Profil geformt sind, die die Fußplatte (12) hohl an ihrer Außenfläche und im Abstand (E) der Leiste mit hakenförmigem Profil (27) besitzt.

6. Profilteil nach einem der Ansprüche 1 bis 5, dadurch gekennzeichnet, daß, wenn es sich um ein extrudiertes Profilteil handelt, der den Deckel (11) bildende Teil nach Extrusion am Rücken der Fußplatte (12) des den Körper (10) bildenden Teils angebracht ist.
